Europäisches Patentamt

European Patent Office

Office européen des brevets

(19)

(11) Veröffentlichungsnummer : **0 090 764**
**B1**

(12) ## EUROPÄISCHE PATENTSCHRIFT

(45) Veröffentlichungstag der Patentschrift :
28.05.86

(51) Int. Cl.⁴ : **C 03 B 23/11**

(21) Anmeldenummer : **83730034.2**

(22) Anmeldetag : **29.03.83**

(54) Vorrichtung zum Beschicken von Glasbearbeitungsmaschinen mit Glasrohren.

(30) Priorität : **30.03.82 DE 3212228**

(43) Veröffentlichungstag der Anmeldung :
**05.10.83 Patentblatt 83/40**

(45) Bekanntmachung des Hinweises auf die Patenterteilung : **28.05.86 Patentblatt 86/22**

(84) Benannte Vertragsstaaten :
**BE CH FR GB IT LI NL**

(56) Entgegenhaltungen :
**DE-B- 1 301 879**
**DE-B- 2 456 584**

(73) Patentinhaber : **Dichter, Hans-Joachim**
**Sachsendamm 93**
**D-1000 Berlin 62 (DE)**

(72) Erfinder : **Dichter, Hans-Joachim**
**Sachsendamm 93**
**D-1000 Berlin 62 (DE)**

(74) Vertreter : **Böning, Manfred, Dr. Ing. et al**
**Patentanwälte Dipl.-Ing. Dieter Jander Dr. Ing. Manfred Böning Kurfürstendamm 66**
**D-1000 Berlin 15 (DE)**

## Beschreibung

Die Erfindung betrifft eine Vorrichtung zum Beschicken von Glasbearbeitungsmaschinen mit Glasrohren aus einem ein Bündel von Glasrohren aufnehmenden Glasrohrspeicher, der eine Austrittsöffnung aufweist und dem ein Vereinzelungsaggregat für die Glasrohre zugeordnet ist.

Es ist eine Vorrichtung der vorstehenden Art bekannt, bei der einzelne Glasrohre durch ein schwenkbares Zuführ- und Absperrorgan aus einem Glasrohrspeicher bei Bedarf in den Bereich eines Zuführtrichters der Klemmbacken einer Glasbearbeitungsmaschine gelangen können (DE-AS 2 719 390). Die bekannte Vorrichtung vermag insofern nicht voll zu befriedigen, als die Glasrohre bei ihr praktisch nur dann in den Zuführtrichter überführbar sind, wenn dieser steht, d. h. wenn die Glasbearbeitungsmaschine schrittweise arbeitet.

Der Erfindung liegt die Aufgabe zugrunde, eine Vorrichtung der in Betracht gezogenen Art zu schaffen, die unter Zuhilfenahme maschineller Mittel mit Glasrohrbündeln beschickbar ist und die automatisch bei Bedarf aus dem Glasrohrbündel einzelne Glasrohre in die Futter einer kontinuierlich arbeitenden Glasbearbeitungsmaschine oder in diesen Futtern vorgeschaltete Glasrohrmagazine überträgt.

Diese Aufgabe wird erfindungsgemäß durch eine Vorrichtung der in Betracht gezogenen Art gelöst, bei der das Vereinzelungsaggregat zur Übertragung einzelner Glasrohre aus dem Glasrohrspeicher in den Greifbereich von Beschickungszangen ausgebildet ist, die an einem Umlaufförderer zur Beschickung der Glasbearbeitungsmaschine mit Glasrohren gelagert sind.

Die erfindungsgemäße Vorrichtung bietet den Vorteil, daß sie mechanisch mit jeweils einer Vielzahl von Glasrohren beschickbar ist und daß die Übertragung der Glasrohre aus dem Glasrohrspeicher in die Glasbearbeitungsmaschine infolge der Verwendung eines Umlaufförderers längs eines vergleichsweise großen Weges der einzelnen Bearbeitungsstationen der Glasbearbeitungsmaschine möglich ist. Die Glasbearbeitungsmaschine braucht zum Zwecke der Beschickung mit neuen Glasrohren folglich nicht zum Stillstand gebracht werden, sondern kann kontinuierlich arbeiten.

Weitere Einzelheiten und Merkmale der Erfindung ergeben sich aus den Unteransprüchen.

Nachstehend ist ein in der beigefügten Zeichnung dargestelltes bevorzugtes Ausführungsbeispiel beschrieben. Es zeigen :

Figur 1 die Draufsicht auf die wesentlichen Teile der Beschickungsvorrichtung und

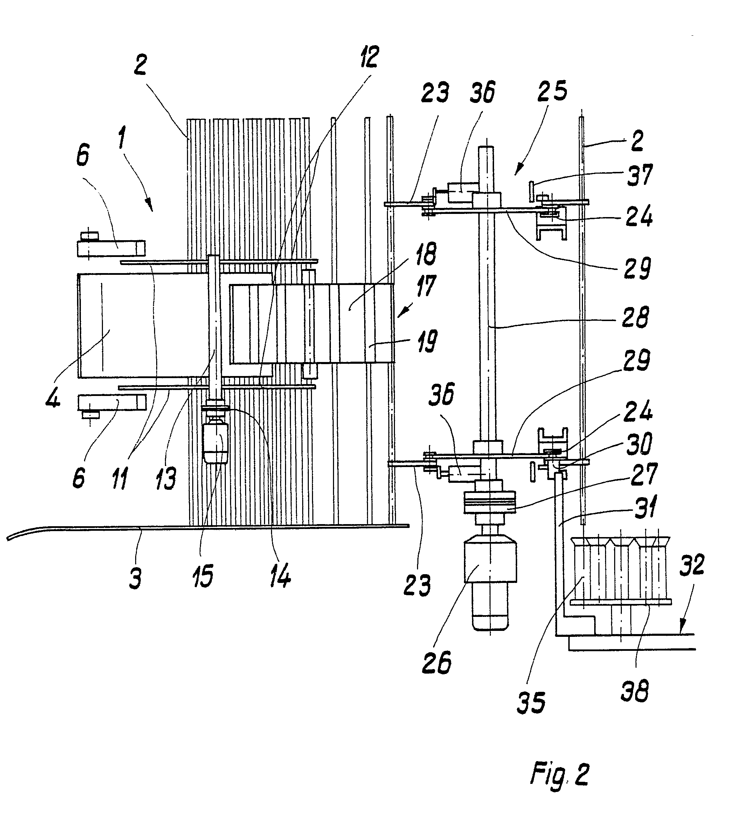

Figur 2 eine Seitenansicht der wesentlichen Teile der Beschickungsvorrichtung gemäß Fig. 1.

In den Figuren ist mit 1 allgemein ein Glasrohrspeicher bezeichnet, in den Bündel von Glasrohren 2 einführbar sind. Der Glasrohrspeicher besitzt einen Boden 3, auf den sich die Enden der Glasrohre 2 abstützen und Führungen 4 und 5, welche seitliche Halterungen für die Glasrohre 2 bilden. 6 ist ein Beschickungsorgan, das durch einen Kolben 7 betätigbar ist und eine Steuerrolle 8 aufweist, die längs einer Kulisse 9 verfahrbar ist. Durch gestrichelte Linien sind unterschiedliche Positionen des Beschickungsorganes 6 angedeutet. Die durch die Eintrittsöffnung 10 in den Glasrohrspeicher 1 eingeführten Glasrohre werden durch das Beschickungsorgan 6 in den Bereich von Vorschubgabeln 11 und 12 bewegt. Die paarweise angeordneten Zinken der Vorschubgabeln 11 und 12 werden dabei von Auslegerarmen einer Welle 13 gebildet. Diese Welle wird über eine Rutschkupplung 14 von einem Antriebsmotor 15 angetrieben. Infolge der Verwendung einer Rutschkupplung 14 üben die Gabeln 11 bzw. 12 jeweils einen leichten Druck auf das vor ihnen liegende Bündel von Glasrohren 2 aus, und die Glasrohre 2 werden folglich zu einer Austrittsöffnung 16 des Glasrohrspeichers 1 gedrückt. Der Austrittsöffnung 16 ist ein Vereinzelungsaggregat 17 nachgeschaltet. Dieses Vereinzelungsaggregat 17 wird von einem Zellenrand 18 gebildet, das an seinem Umfang mit einer Vielzahl von nach außen offenen Zellen 19 zur Aufnahme jeweils eines Glasrohres 2 versehen ist. Über einen Teil des Umfangs des Zellenrades 18 erstreckt sich ein Andrückband 20, welches die aus der Austrittsöffnung 16 des Glasrohrspeichers in die Zellen 19 überführten Glasrohre 2 in den Zellen 19 hält. Das Andrückband passiert zwei Umlenktrommeln 21 und 22. Von diesen beiden Umlenktrommeln ist die Umlenktrommel 21 im Bereich der Austrittsöffnung 16 des Glasrohrspeichers 1 angeordnet. Dies hat zur Folge, daß das jeweils gegen das Andrückband 20 zur Anlage kommende Glasrohr 2 im Bereich der Austrittsöffnung 16 in Drehung versetzt wird und ein Festklemmen von Glasrohren im Bereich der Austrittsöffnung verhindert.

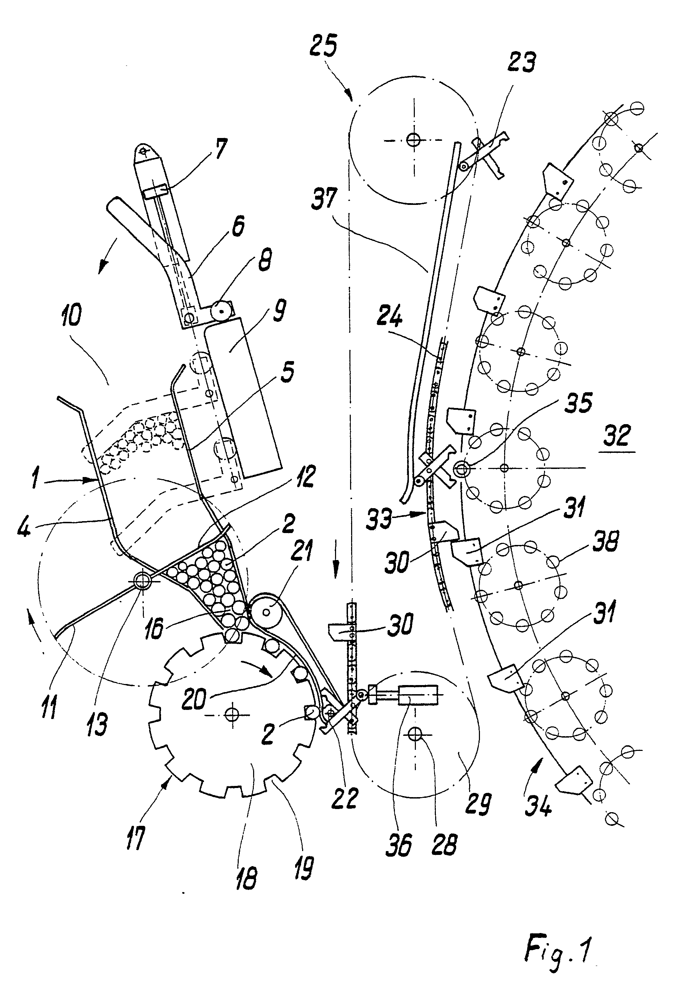

Durch das Zellenrad 18 und das Andrückband 20 werden einzelne Glasrohre 2 in den Greifbereich von Beschickungszangen 23 überführt, die an Förderketten 24 eines allgemein mit 25 bezeichneten Umlaufförderers befestigt sind. Zum Antrieb des Umlaufförderers 25 und seiner Förderketten 24 dient ein Getriebemotor 26 mit stufenlos einstellbarer Drehzahl, der über eine Überholkupplung 27 die Kettenradwelle 28 zweier Antriebskettenräder 29 antreibt. Die Überholkupplung 27 ist erforderlich, weil der Umlaufförderer 25 mit Anschlägen 30 versehen ist, die durch Mitnehmer 31 der Glasbearbeitungsmaschine 32 mitgenommen werden. Wie man aus Fig. 1 erkennt, verläuft ein Teil 33 der Bahn der Förderketten 24 des Umlaufförderers 25 in konstantem Abstand zur Bahn 34 von Aufnahmen 35 für die Glasrohre an der Glasbearbeitungsmaschine 32.

Mit 36 und 37 schließlich sind Betätigungsorgane zum Öffnen und Schließen der Beschickungszangen 23 bezeichnet. Das Betätigungsorgan 36 wird von einem elektrisch oder pneumatisch betätigten Beschickungszangenöffner und das Betätigungsorgan 37 von einer Steuerschiene gebildet.

Es versteht sich, daß das Auslösen eines Beschickungsvorganges in Abhängigkeit vom Füllungsgrad von Glasrohrmagazinen 38 der Glasbearbeitungsmaschine 32 gesteuert wird. Auf eine Beschreibung einer entsprechenden Steuereinrichtung wird hier bewußt verzichtet.

**Patentansprüche**

1. Vorrichtung zum Beschicken von Glasbearbeitungsmaschinen mit Glasrohren aus einem einen Bündel von Glasrohren (2) aufnehmenden Glasrohrspeicher (1), der eine Austrittsöffnung (16) aufweist und dem ein Vereinzelungsaggregat (17) für die Glasrohre (2) zugeordnet ist, dadurch gekennzeichnet, daß das Vereinzelungsaggregat (17) zur Übertragung einzelner Glasrohre aus dem Glasrohrspeicher (1) in den Greifbereich von Beschickungszangen (23) ausgebildet ist, die an einem Umlaufförderer (25) zur Beschickung der Glasbearbeitungsmaschine (32) mit Glasrohren gelagert sind.

2. Vorrichtung nach Anspruch 1, dadurch gekennzeichnet, daß der einen Boden (3) zum Abstützen der Enden der Glasrohre und Führungen (4, 5) für deren seitliche Halterung aufweisende Glasrohrspeicher (1) mit mindestens einer die Glasrohre (2) zwischen die Führungen (4, 5) drückenden Vorschubgabel (11, 12) versehen ist.

3. Vorrichtung nach Anspruch 2, dadurch gekennzeichnet, daß der Glasrohrspeicher (1) mit mindestens zwei Vorschubgabeln (11, 12) versehen ist, deren Zinken von Auslegerarmen einer Welle (13) gebildet werden.

4. Vorrichtung nach Anspruch 3, dadurch gekennzeichnet, daß die die Auslegerarme tragende Welle (13) über eine Rutschkupplung (14) mit einem Antriebsmotor (15) in Verbindung steht.

5. Vorrichtung nach einem der Ansprüche 1 bis 4, dadurch gekennzeichnet, daß das Vereinzelungsaggregat (17) von einem Zellenrad (18) gebildet wird, das an seinem Umfang mit einer Vielzahl von nach außen offenen Zellen (19) zur Aufnahme jeweils eines Glasrohres (2) versehen ist.

6. Vorrichtung nach Anspruch 5, dadurch gekennzeichnet, daß sich über einen Teil des Umfangs des Zellenrades (18) ein Andrückband (20) erstreckt, welches die aus der Austrittsöffnung (16) des Glasrohrspeichers (1) in die Zellen (19) überführten Glasrohre (2) in den Zellen (19) hält.

7. Vorrichtung nach Anspruch 6, dadurch gekennzeichnet, daß eine Umlenktrommel (21) des Andrückbandes (20) in den Bereich der Austrittsöffnung (16) des Glasrohrspeichers (1) ragt.

8. Vorrichtung nach einem der Ansprüche 1 bis 7, dadurch gekennzeichnet, daß der Umlenkförderer (25) zwei im Abstand übereinander angeordnete Förderketten (24) aufweist.

9. Vorrichtung nach Anspruch 8, dadurch gekennzeichnet, daß zum Antrieb der Förderketten (24) eine über eine Überholkupplung (27) mit einem Getriebemotor (26) verbundene Kettenradwelle (28) mit zwei Antriebskettenrädern (29) dient.

10. Vorrichtung nach einem der Ansprüche 1 bis 9, dadurch gekennzeichnet, daß der Umlaufförderer (25) mit Anschlägen (30) für Mitnehmer (31) der Glasbearbeitungsmaschine (32) versehen ist.

11. Vorrichtung nach einem der Ansprüche 1 bis 10, dadurch gekennzeichnet, daß ein Teil (33) der Bahn des Umlaufförderers (25) eine Äquidistante zur Bahn (34) der Aufnahmen (35) für die Glasrohre an der Glasbearbeitungsmaschine (32) bildet.

12. Vorrichtung nach einem der Ansprüche 1 bis 11, dadurch gekennzeichnet, daß dem Umlaufförderer (25) Betätigungsorgane (36, 37) zum Öffnen und Schließen der Beschickungszangen (23) zugeordnet sind.

**Claims**

1. Appliance for feeding glass tubes to glass-processing machines, from a glass-tube magazine (1) which receives a bundle of glass tubes (2), which possesses an exit opening (16) and to which a unit (17) for separating the glass tubes (2) is assigned, characterised in that the separating unit (17) is developed as to transfer individual glass tubes from the glass-tube magazine (1) into the gripping zone of feeding tongs (23) which are mounted on an endless conveyor (25) serving the function of feeding the glass tubes to the glass-processing machine (32).

2. Appliance according to Claim 1, characterised in that the glass-tube magazine (1), which possesses a bottom (3) for supporting the ends of the glass tubes (2) and guides (4, 5) for holding them laterally, is provided with at least one forward-feed fork (11, 12) which presses them between the guides (4, 5).

3. Appliance according to Claim 2, characterised in that the glass-tube magazine (1) is provided with at least two forward-feed forks (11, 12), the prongs of which are formed by cantilever arms on a shaft (13).

4. Appliance according to Claim 3, characterised in that the shaft (13) carrying the cantilever arms is connected to a drive motor (15) via a slipping clutch (14).

5. Appliance according to one of Claims 1 to 4 characterised in that the separating unit (17) is formed by a cellular wheel (18) which is provided, at its periphery, with a large number of cells (19), these cells being open towards the outside so that each can receive one glass tube (2).

6. Appliance according to Claim 5, characterised in that a pressure-belt (20) extends over a portion of the periphery of the cellular wheel (18), this belt (20) holding the glass tubes (2) in the cells (19), into which they have been transferred from the exit opening (16) of the glass-tube magazine (1).

7. Appliance according to Claim 6, characterised in that one reversing drum (21) of the pressure-belt (20) projects into the region of the exit opening (16) of the glass-tube magazine (1).

8. Appliance according to one of Claims 1 to 7, characterised in that the endless conveyor (25) possesses two conveying chains (24) which are arranged one above the other.

9. Appliance according to Claim 8, characterised in that a chainwheel shaft (28) with two drive-chainwheels (29) serves to drive the conveying chains (24), this shaft (28) being connected to a geared motor (26) via an overrunning clutch (27).

10. Appliance according to one of Claims 1 to 9, characterised in that the endless conveyor (25) is fitted with stops (30) for driving-dogs (31) on the glass-processing machine (32).

11. Appliance according to one of Claims 1 to 10, characterised in that a portion (33) of the path of the endless conveyor (25) forms an equidistant path with respect to the path (34) of the receptacles (35) for the glass tubes on the glass-processing machine (32).

12. Appliance according to one of Claims 1 to 11, characterised in that actuating members (36, 37) are assigned to the endless conveyor (25) for the purpose of opening and closing the feeding tongs (23).

## Revendications

1. Appareil pour alimenter une machine à travailler le verre avec des tubes de verre à partir d'un magasin de tubes de verre (1) contenant un paquet de tubes de verre (2), qui comporte un orifice de sortie (16) et auquel est associé un dispositif (17) pour séparer les tubes de verre (2), caractérisé en ce que le dispositif de séparation (17) est formé pour transmettre les tubes de verre isolés hors du magasin de tubes de verre (1) dans la zone de prise des pinces d'alimentation (23) qui sont montées sur un transporteur (25) destiné à l'alimentation d'une machine à travailler le verre (32) en tubes de verre.

2. Appareil selon la revendication 1, caractérisé en ce que le magasin de tubes de verre (1) qui comporte un fond (3) pour soutenir les extrémités des tubes de verre et des guides (4, 5) destinés à leur maintien latéral, est équipé d'au moins une fourche d'avance (11, 12) poussant les tubes de verre (2) entre les guides (4, 5).

3. Appareil selon la revendication 2, caractérisé en ce que le magasin de tubes de verre (1) est équipé d'au moins deux fourches d'avance (11, 12) dont les branches sont constituées par les bras d'un arbre (13).

4. Appareil selon la revendication 3, caractérisé en ce que l'arbre (13) supportant les bras est relié à un moteur d'entraînement (15) par l'intermédiaire d'un accouplement à friction (14).

5. Appareil selon l'une des revendications 1 à 4, caractérisé en ce que le dispositif de séparation (17) est constitué par une roue à alvéoles (18) ayant sur sa circonférence une multitude d'alvéoles (19) ouverts vers l'extérieur pour recevoir chacun un tube de verre (2).

6. Appareil selon la revendication 5, caractérisé en ce qu'un ruban de pression (20) recouvre une partie de la circonférence de la roue à alvéoles (18) et maintient dans les alvéoles (19) les tubes de verre (2) entraînés dans les alvéoles (19) à la sortie de l'orifice de sortie (16) du magasin de tubes de verre (1).

7. Appareil selon la revendication 6, caractérisé en ce qu'une poulie de renvoi (21) du ruban de pression (20) se trouve dans la zone de l'orifice de sortie (16) du magasin de tubes de verre (1).

8. Appareil selon l'une des revendications 1 à 7, caractérisé en ce que le transporteur (25) comporte deux chaînes transporteuses (24) placées à une certaine distance l'une au-dessus de l'autre.

9. Appareil selon la revendication 8, caractérisé en ce qu'un arbre de roue à chaîne (28) muni de deux roues à chaîne d'entraînement (29) et relié à un moto-réducteur (26) par l'intermédiaire d'un embrayage à roue libre (24) sert à l'entraînement des chaînes transporteuses (24).

10. Appareil selon l'une des revendications 1 à 9, caractérisé en ce que le transporteur (25) est équipé de butées (30) pour des taquets (31) de la machine à travailler le verre (32).

11. Appareil selon l'une des revendications 1 à 10, caractérisé en ce qu'une partie (33) de la trajectoire du transporteur (25) est équidistante à la trajectoire (34) des logements (35) pour les tubes de verre prévus sur la machine à travailler le verre (32).

12. Appareil selon l'une des revendications 1 à 11, caractérisé en ce que des organes de commande (36, 37) pour l'ouverture et la fermeture des pinces d'alimentation (23) sont associés au transporteur (25).

Fig. 1

Fig. 2